# EUROPÄISCHE PATENTSCHRIFT

(11) **EP 4 204 702 B1**
(45) Veröffentlichungstag und Bekanntmachung des Hinweises auf die Patenterteilung: **08.05.2024**
(21) Anmeldenummer: 21763048.2
(22) Anmeldetag: 13.08.2021
(51) Int. Cl.: F16C 29/00, F16C 29/06

(54) **FÜHRUNGSEINRICHTUNG SOWIE TÜRSYSTEM**
GUIDE DEVICE AND DOOR SYSTEM
APPAREIL DE GUIDAGE ET SYSTÈME DE PORTE

(30) Priorität: 25.08.2020 DE 202020104914 U
(43) Veröffentlichungstag der Anmeldung: 05.07.2023
(73) Patentinhaber: Bode - Die Tür GmbH, 34123 Kassel (DE)
(72) Erfinder: LINNENKOHL, Lars, 34355 Staufenberg (DE)
(74) Vertreter: Patentanwälte Bauer Vorberg Kayser
(86) Internationale Anmeldenummer: PCT/EP2021/072596
(87) Internationale Veröffentlichungsnummer: WO 2022/043096

(56) Entgegenhaltungen:
- EP-A1- 0 443 098
- EP-A2- 1 319 853
- EP-A2- 1 914 372

## Beschreibung

Die vorliegende Erfindung betrifft eine Führungseinrichtung, umfassend eine Führungsschiene sowie einen zumindest teilweise in die Führungsschiene eingreifenden und in der Führungsschiene über ein Kugelumlauflager linearbeweglich geführten Läufer, wobei die dem Kugelumlauflager zugehörigen Kugeln in zumindest einer Kugelreihe aufgereiht und in zumindest einer Kugellaufbahn geführt sind, wobei die einer jeweiligen Kugelreihe zugehörigen Kugeln jeweils in einer sich aus einer ersten und einer zweiten Teil-Kugellaufbahn zusammensetzenden Kugellaufbahn geführt sind, wobei die erste Teil-Kugellaufbahn in dem Läufer ausgebildet ist und sich entlang einer Läufer-Längsachse erstreckt und wobei die zweite Teil-Kugellaufbahn ausgebildet ist durch eine an dem Läufer ausgebildete und sich entlang der Läufer-Längsachse erstreckende Läufer-Führungsnut und eine der Läufer-Führungsnut gegenüberliegende, an der Führungsschiene ausgebildete Führungsschienen-Führungsnut, und wobei im Bereich eines bezogen auf die Läufer-Längsachse ersten und zweiten Läufer-Endes jeweils Umlenkmittel zum Umlenken der Kugeln aus der ersten in die zweite Teil-Kugellaufbahn und umgekehrt angeordnet sind.

Ferner betrifft die vorliegende Erfindung ein Türsystem, insbesondere ein Schiebe- oder Schwenkschiebetürsystem, für ein Fahrzeug des öffentlichen Personenverkehrs, umfassend einen Türflügel, der unter Einsatz einer Antriebseinheit aus einer ein Türportal des Fahrzeugs verschließenden Stellung in eine einen Fahrgastzustieg durch das Türportal freigebende Öffnungsstellung bewegbar ist, wobei der Türflügel in einer Tragführung getragen ist, die Tragführung umfassend eine erfindungsgemäße Führungseinrichtung.

Unter einem "Fahrzeug" des öffentlichen Personenverkehrs können radgebundene oder schienengebundene Fahrzeuge zu verstehen sein. Bei einem radgebundenen Fahrzeug kann es sich beispielsweise um ein Busfahrzeug oder ein anderweitiges zum Personentransport vorgesehenes Transportfahrzeug handeln. Bei einem schienengebundenen Fahrzeug kann es sich um einen Zug (z.B. einen Hochgeschwindigkeitszug oder einen Regionalzug), eine Straßenbahn, eine Tram, eine S-Bahn, eine U-Bahn etc. handeln.

Die Erfindung kann sich auf einflüglige oder zweiflüglige Fahrgasttüren beziehen, wobei die Fahrgasttüren als Schiebetür oder Schwenkschiebetür ausgebildet sein können. Die nachfolgenden Ausführungen beziehen sich zur Vereinfachung auf eine mit einem Türflügel ausgestattete Fahrgasttür. Die vorliegend verwendeten, auf "einen" Türflügel bezogenen Termini und Beschreibungspassagen, schließen demnach nicht aus, dass die Erfindung auch bei zwei- oder mehrflügligen Fahrgasttüren zum Einsatz kommen kann. Unter einem "Türflügel" kann synonym auch ein "Türblatt" verstanden werden.

Führungseinrichtungen mit Kugelumlaufführungen sind aus dem Stand der Technik allgemein bekannt, insbesondere um hochbelastbare und hochpräzise Führungen bereitzustellen. Ein typisches Anwendungsfeld von Kugelumlaufführungen ist die Werkzeugmaschinentechnik. Nichtsdestotrotz lassen sich Kugelumlaufführungen auch in anderweitigen Technikfeldern einsetzen, in denen Linearführungen von Bedeutung sind. Derartige Führungen kommen beispielsweise in Türsystemen von Fahrzeugen des öffentlichen Personenverkehrs, insbesondere des Personentransports, zum Einsatz, beispielsweise bei Schiebe- oder Schwenkschiebetürsystemen.

Eine bei einer Fahrgasttür für ein Fahrzeug des öffentlichen Personenverkehrs zum Einsatz kommende Führungseinrichtung mit den eingangs beschriebenen Merkmalen ist beispielsweise aus der EP 1 914 372 A2 bekannt. Im Speziellen umfasst die dortige Führungseinrichtung eine Führungsschiene sowie einen zumindest teilweise in die Führungsschiene eingreifenden und in der Führungsschiene über ein Kugelumlauflager linearbeweglich geführten Läufer, wobei die dem Kugelumlauflager zugehörigen Kugeln in zwei Kugelreihen aufgereiht und in Kugellaufbahnen geführt sind, wobei die einer jeweiligen Kugelreihe zugehörigen Kugeln jeweils in einer sich aus einer ersten und einer zweiten Teil-Kugellaufbahn zusammensetzenden Kugellaufbahn geführt sind, wobei die ersten Teil-Kugellaufbahnen in dem Läufer ausgebildet sind und sich in paralleler Anordnung entlang einer Läufer-Längsachse erstrecken und wobei die zweiten Teil-Kugellaufbahnen jeweils ausgebildet sind durch eine an dem Läufer ausgebildete und sich entlang der Läufer-Längsachse erstreckende Läufer-Führungsnut und eine der jeweiligen Läufer-Führungsnut gegenüberliegende, an der Führungsschiene ausgebildete Führungsschienen-Führungsnut, und wobei im Bereich eines bezogen auf die Läufer-Längsachse ersten und zweiten Läufer-Endes jeweils Umlenkmittel zum Umlenken der Kugeln aus einer der ersten in eine der zweiten Teil-Kugellaufbahnen und umgekehrt angeordnet sind.

Nachteilig bei der dortigen Konstruktion ist, dass die Kugeln vor der Montage der Kugel-Umlenkmittel in die an dem Läufer ausgebildeten Kugellaufbahnen gefüllt werden müssen. Ein einfacher nachträglicher Austausch der Kugeln im montierten Zustand der Führungseinrichtung ist nicht gewährleistet, sondern bedarf zumindest einer Demontage der Kugelumlenkmittel, was somit mit einem erhöhten Aufwand verbunden ist.

Führungseinrichtungen mit verbesserter Austauschmöglichkeit der Kugeln sind aus EP 0 443 098 A1 und EP 1 319 853 A2 bekannt, welche den Oberbegriff des Anspruchs 1 zeigen. Ferner weist die aus der EP 1 914 372 A2 bekannte Führungseinrichtung einen zum Tragen eines Türflügels ausgebildeten Träger auf. Der Träger ist an dem Läufer montiert und erstreckt sich nahezu über die gesamte Länge des Läufers. Nachteilig an einem derart ausgebildeten Träger ist - insbesondere bei Verwendung bei einer Fahrgasttür eines Fahrzeugs des öffentlichen Personenverkehrs - das aus der massiven Bauweise resultierende relativ hohe Eigengewicht sowie der relativ hohe Bauraumbedarf.

Entsprechend liegt der vorliegenden Erfindung die Aufgabe zugrunde, eine Führungseinrichtung sowie ein Türsystem für ein Fahrzeug des öffentlichen Personenverkehrs bereitzustellen, womit eine flexible Befüllung bzw. Austauschbarkeit von dem Kugelumlauflager zugehörigen Kugeln auch im montierten Zustand ermöglicht sowie das Gewicht und der Bauraumbedarf reduziert wird.

Zur Lösung dieser Aufgabe wird eine Führungseinrichtung mit den Merkmalen des Anspruchs 1 sowie ein Türsystem mit den Merkmalen des Anspruchs 12 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich. Auch können die im Zusammenhang einer erfindungsgemäßen Führungseinrichtung beschriebenen Merkmale vorteilhafte Ausgestaltungen eines erfindungsgemäßen Türsystems sein und umgekehrt.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Wie erwähnt, betrifft die vorliegende Erfindung zunächst eine Führungseinrichtung, umfassend eine Führungsschiene sowie einen zumindest teilweise in die Führungsschiene eingreifenden und in der Führungsschiene über ein Kugelumlauflager linearbeweglich geführten Läufer, wobei die dem Kugelumlauflager zugehörigen Kugeln in zumindest einer Kugelreihe aufgereiht und in zumindest einer Kugellaufbahn geführt sind, wobei die einer jeweiligen Kugelreihe zugehörigen Kugeln jeweils in einer sich aus einer ersten und einer zweiten Teil-Kugellaufbahn zusammensetzenden Kugellaufbahn geführt sind, wobei die erste Teil-Kugellaufbahn in dem Läufer ausgebildet ist und sich entlang einer Läufer-Längsachse erstreckt und wobei die zweite Teil-Kugellaufbahn ausgebildet ist durch eine an dem Läufer ausgebildete und sich entlang der Läufer-Längsachse erstreckende Läufer-Führungsnut und eine der Läufer-Führungsnut gegenüberliegende, an der Führungsschiene ausgebildete Führungsschienen-Führungsnut, und wobei im Bereich eines bezogen auf die Läufer-Längsachse ersten und zweiten Läufer-Endes jeweils Umlenkmittel zum Umlenken der Kugeln aus der ersten in die zweite Teil-Kugellaufbahn und umgekehrt angeordnet sind.

Die Führungseinrichtung zeichnet sich dadurch aus, dass die erste Teil-Kugellaufbahn ausgebildet ist durch einen sich entlang der Läufer-Längsachse erstreckenden und in dem Läufer ausgebildeten Führungskanal sowie eine den Führungskanal nach außen begrenzende Abdeckplatte, wobei die Abdeckplatte mit dem Läufer lösbar verbunden ist. Die Abdeckplatte ist dabei nicht zwingend nach Art einer ebenen Platte ausgebildet, sondern kann ein an die Läufergeometrie angepasstes Profil bzw. eine daran angepasste Geometrie aufweisen. Die Abdeckplatte kann aus demselben Material gefertigt sein wie der Läufer, beispielsweise aus Metall. Gleichsam kommt für den Läufer und die Abdeckplatte eine Fertigung aus Kunststoff oder einem Verbundwerkstoff in Betracht. Zwischen der Abdeckplatte und dem Läufer kann eine umlaufende Dichtung vorgesehen sein, die ausgebildet sein kann aus an der Abdeckplatte und/oder dem Läufer angeordneten Dichtlippen, die beispielsweise aus Gummi gefertigt sein können.

Durch die lösbar mit dem Läufer verbundene Abdeckplatte wird eine Befüllung des Kugelumlauflagers mit Kugeln auch in einem montierten Zustand der Führungseinrichtung (z.B. in einer Tragführung einer ebenfalls mit der Erfindung vorgeschlagenen Türsystems) ermöglicht. Gleichsam können in einem solchen montierten Zustand defekte oder abgenutzte Kugeln in einfacher Weise ausgetauscht werden, ohne die Notwendigkeit die Führungseinrichtung auseinanderzubauen. Entsprechend wird mit der vorliegenden Erfindung die Wartung der Führungseinrichtung flexibilisiert und vereinfacht.

Vorzugsweise sind die Kugeln bei der vorliegenden Erfindung - wie aus dem Stand der Technik bekannt - in zwei Kugelreihen aufgereiht, wobei die Kugeln einer jeweiligen Kugelreihe in einer aus einer ersten Teil-Kugellaufbahn und einer zweiten Teil-Kugellaufbahn gebildeten Kugellaufbahn geführt sind. Die ersten und zweiten Teil-Kugellaufbahnen sind dabei parallel angeordnet.

Bei der Führungsschiene kann es sich insbesondere um ein Metallprofil handeln, das beispielsweise ein gezogenes U- oder C-förmiges Profil sein kann, wobei das Profil einen Profilgrund und zwei an den Profilgrund angrenzende Profilschenkel aufweist. Die erwähnten, gemeinsam mit den Läufer-Führungsnuten die zweiten Teil-Kugellaufbahnen bildenden Führungsschienen-Führungsnuten sind dabei jeweils in den Profilschenkeln des Profils ausgebildet, nämlich - bezogen auf das Profil - innenliegend und einander zugewandt. Die Führungsschiene stellt ein feststehendes, d.h. bewegungs- bzw. ortsfest angeordnetes Bauteil dar, wobei der Läufer ein planbarallel zu der Führungsschiene bewegbares Lagerteil bereitstellt. Die erwähnten Kugelreihen nehmen dabei eine zwischen dem feststehenden Lagerteil und dem bewegbaren Lagerteil wirkende Traglast auf. Eine Traglast kann beispielsweise durch ein dem Läufer befestigtes Lastelement begründet werden, beispielsweise einen Türflügel. Derartig ausgebildete Führungsschienen lassen sich auf relativ einfache Art und Weise fertigen und montieren. Auch komplexere Führungsanordnungen lassen sich mit derartigen Führungsschienen aufbauen.

Wie erwähnt, ist in der Führungsschiene ein Läufer linearbeweglich geführt. Selbstverständlich können auch mehrere Läufer in der genannten Führungsschiene geführt sein. Der Läufer weist eine profilierte Form auf, und stellt zwei Läufer-Führungsnuten bereit, die jeweils einer in den Profilschenkeln ausgebildeten Führungsschienen-Führungsnut gegenüberliegen. Dadurch wird eine geschirmte und stabile Lagerung der Kugeln gewährleistet. Im montierten Zustand ist der Läufer gegenüber der positionsfest angeordneten Führungsschiene linear verschiebbar, eine Relativbewegung in einer Richtung quer zur Führungsschiene ist durch die Kugelumlaufführung verhindert, weshalb der Läufer gegen ein Herausfallen aus der Führungsschiene gesichert ist.

Die ersten Teil-Kugellaufbahnen sind - wie erwähnt - jeweils ausgebildet durch einen sich entlang der Läufer-Längsachse erstreckenden und in dem Läufer ausgebildeten Führungskanal, sowie eine den Führungskanal nach außen begrenzende Abdeckplatte, wobei die Abdeckplatte mit dem Läufer lösbar verbunden ist. Die Führungskanäle sind dabei parallel zueinander angeordnet und vorzugsweise gleichartig ausgebildet. Im Querschnitt sind die jeweiligen Führungskanäle nach Art einer Halbschale ausgebildet, d.h. sie weisen eine sich entlang des Führungskanals erstreckende Halbschalenöffnung auf, wobei die Halbschalenöffnungen beider Führungskanäle durch die Abdeckplatte nach außen begrenzt sind. Die Abdeckplatte kann über geeignete Verbindungsmittel bzw. Befestigungsmittel an dem Läufer befestigt werden. Die Verbindung respektive Befestigung erfolgt dabei reversibel (d.h. lösbar), sodass ein einfacher Austausch der in den Führungskanälen angeordneten Kugeln ermöglicht ist.

Weitere vorteilhafte Ausgestaltungen einer erfindungsgemäßen Führungseinrichtung ergeben sich aus den in den Unteransprüchen angegebenen sowie den nachfolgend beschriebenen Merkmalen. Auch die in den Unteransprüchen angegebenen Merkmale seien nachfolgend beschrieben.

Nach einer ersten vorteilhaften Ausgestaltung kann bei einer mit der Erfindung vorgeschlagenen Führungseinrichtung vorgesehen sein, dass die Kugeln bei demontierter Abdeckplatte austauschbar sind. Bei den aus dem Stand der Technik bekannten Führungseinrichtungen ist es zum Austausch der das Lager bildenden Kugeln in der Regel erforderlich, mehrere Komponenten der Führungseinrichtung auseinander zu bauen, was mit einem erhöhten Zeit- und Montageaufwand verbunden ist. So kann ein Kugelaustausch bei den aus der EP 1 914 372 A2 bekannten Läufern beispielsweise lediglich durch an den Läufer-Enden bzw. den Stirnseiten des Läufers vorgesehene Öffnungen erfolgen. Dazu ist es erforderlich die im Bereich der Läufer-Enden vorgesehenen Umlenkmittel zu demontieren und im Anschluss an einen erfolgten Kugelaustausch wieder zusammenzubauen. Bei der vorliegenden Erfindung können die Kugeln durch einfaches Demontieren der Abdeckplatte ausgetauscht werden. Auch ein initiales Befüllen des Kugelumlauflagers mit Kugeln ist auf diese Weise - auch bei bereits in die Führungsschiene eingesetztem Läufer und montierten Umlenkmitteln möglich.

Nach einer weiteren vorteilhaften Ausgestaltung kann bei einer mit der Erfindung vorgeschlagenen Führungseinrichtung vorgesehen sein, dass die in den ersten Teil-Kugellaufbahnen geführten Kugeln mit ihrer Kugeloberfläche an einer Innenfläche des Führungskanals und/oder an einer dem Führungskanal zugewandten Innenfläche der Abdeckplatte anliegen. Wie die Konjunktion "und/oder" kenntlich macht, können die Kugeln - sofern sie sich im Bereich der ersten Teil-Kugellaufbahnen befinden - sowohl an einer Innenfläche des Führungskanals als auch an der Innenfläche der Abdeckplatte anliegen und durch die genannten Innenflächen geführt werden. Je nach Geometrie, Größe und Raumlage (bzw. Raumorientierung) des Läufers und der Abdeckplatte können jedoch auch die Kugeln (zumindest zeitweise) lediglich mit der Innenfläche des Führungskanals oder der Innenfläche der Abdeckplatte in Kontakt stehen. Der Flächenkontakt der Kugeln kann sich insbesondere durch eine Neigung der Führungseinrichtung im Raum ändern. Gleichsam können die durch die Führungskanäle und die Abdeckplatte begrenzten ersten Teil-Kugellaufbahnen aber auch in ihrer Größe und Form derart ausgebildet sein, dass die ersten Teil-Kugellaufbahnen einen an den Durchmesser der Kugeln angepassten Durchmesser aufweisen und die Kugeln bei Ihrer Bewegung entlang der ersten Teil-Kugellaufbahn an den genannten Innenflächen anliegen.

Nach einer weiteren vorteilhaften Ausgestaltung kann bei einer mit der Erfindung vorgeschlagenen Führungseinrichtung vorgesehen sein, dass jene die Kugeln einer der Kugelreihen führende Kugellaufbahn gebildet ist aus einem Paar einer der ersten und einer der zweiten Teil-Kugellaufbahnen, wobei sich die dem Paar zugehörige erste und zweite Teil-Kugellaufbahn diagonal gegenüberliegen. Die Kugel-Umlenkung der Kugeln von einer ersten in eine zweite Teil-Kugellaufbahn und umgekehrt wird bei einer solchen räumlichen Überkreuzanordnung der die jeweiligen Kugellaufbahnen bereitstellenden Teil-Kugellaufbahnen durch die genannten Umlenkmittel verwirklicht, die - wie erwähnt - im Bereich des bezogen auf die Läufer-Längsachse ersten und zweiten Läufer-Endes angeordnet sind. Gleichwohl ist es aber auch möglich, dass jene die Kugellaufbahnen einer jeweiligen Kugelreihe bereitstellenden Teil-Kugellaufbahnen senkrecht umgelenkt werden, d.h. eine jeweilige erste Teil-Kugellaufbahn ist oberhalb einer jeweiligen zweiten Kugellaufbahn angeordnet. Eine senkrechte Umlenkung resultiert in einem kürzeren Umlenkweg für die Kugeln. Eine Überkreuzführung bzw. Überkreuzumlenkung der Kugeln hingegen ermöglicht die Verwendung von Kugeln mit größeren Durchmessern bei gleichbleibender Bauhöhe des Läufers, d.h. die Bauhöhe des Läufers im Umlenkungs- oder Rückführungsbereich (also an den Läufer-Enden) muss nicht wesentlich erhöht werden. Eine solche Führung der Kugelreihen erlaubt eine kompakte Bauform des Läufers sowie der Umlenkmittel, letztlich somit auch eine kompakte Bauform der Führungseinrichtung.

Erfindungsgemäß ist bei einer mit der Erfindung vorgeschlagenen Führungseinrichtung ein zum Tragen eines Lastelements ausgebildeter Träger vorgesehen, der mit dem Läufer lösbar verbunden ist. An einem solchen Träger kann ein Lastelement unmittelbar befestigt bzw. angeordnet werden. Auch kann an dem Träger ein Lastelement mittelbar befestigt werden, d.h. unter Zwischenschaltung geeigneter Verbindungs-, Trag-, oder Führungsmittel. Eine "Befestigung" schließt nicht aus, dass der Träger nebst dem "Tragen" einer Last auch Führungs- oder Lagereigenschaften aufweist. Die lösbare Verbindbarkeit des Trägers mit dem Läufer vereinfacht die Montage der Führungseinrichtung vor der Inbetriebnahme. Auch lässt sich der Träger damit einfacher austauschen, z.B. im Schadens- oder Wartungsfall.

Nach einer weiteren vorteilhaften Ausgestaltung kann bei einer mit der Erfindung vorgeschlagenen Führungseinrichtung vorgesehen sein, dass die Abdeckplatte und der Träger über Befestigungsmittel, insbesondere Schraubmittel, mit dem Läufer lösbar verbunden sind, wobei die Abdeckplatte zwischen dem Läufer und dem Träger angeordnet ist. Bei einer solchen Ausgestaltung muss der Träger zur Entfernung der Abdeckplatte (also zum Austausch der Kugeln) durch Lösen der Befestigungsmittel von dem Läufer entfernt werden. Die Befestigung des Trägers bzw. der Abdeckplatte ist vorzugsweise durch über die Länge des Trägers bzw. der Abdeckplatte verteilt angreifende Befestigungsmittel verwirklicht, d.h. die Abdeckplatte und der Träger weisen mehrere Befestigungspunkte auf, um die Befestigungskräfte bestmöglich zu verteilen. An dem Läufer kann zwischen den Führungskanälen ein Befestigungssteg ausgebildet sein, in welchen über die Länge des Befestigungsstegs eine Mehrzahl von Gewindeöffnungen eingelassen ist. Diese Gewindeöffnungen können genutzt werden, um die Abdeckplatte und den Träger unter Einsatz geeigneter Befestigungsmittel (z.B. Schraubmittel) an dem Läufer zu befestigen. Die Schraubmittel können vorzugsweise Gewindeschrauben sein. Der genannte Befestigungssteg des Läufers ist vorzugsweise einteiliger Bestandteil desselbigen.

Erfindungsgemäß ist bei einer mit der Erfindung vorgeschlagenen Führungseinrichtung vorgesehen, dass der Träger gebildet ist aus
a. einem Montageabschnitt, der dazu ausgebildet ist, mit dem Läufer und/oder der Abdeckplatte lösbar verbunden zu werden, wobei sich der Montageabschnitt entlang Läufer-Längsachse über eine Teillänge des Läufers erstreckt;
b. einem seitlich an den Montageabschnitt angrenzenden Stützflansch, der dazu ausgebildet ist, mit einer Stützfläche seitlich an dem Läufer anzuliegen und sich an diesem abzustützen;
c. und einem Tragabschnitt, der dazu ausgebildet ist, das Lastelement zu tragen und/oder zu führen.

Weiterhin kann vorgesehen sein, dass in dem Montageabschnitt Gewindeöffnungen ausgebildet sind, die mit in der Abdeckplatte und dem Läufer ausgebildeten Gewindeöffnungen kongruent in Deckung verbringbar sind, sodass die jeweiligen Gewindeöffnungen übereinanderliegen. Ferner können in einem montierten Zustand Schraubmittel, insbesondere Gewindeschrauben, in die übereinanderliegenden Gewindeöffnungen eingreifen. Da die Abdeckplatte - wie erwähnt - zwischen Träger und Läufer angeordnet ist, ist der Montageabschnitt des Trägers über die Schraubmittel sowohl mit der Abdeckplatte als auch mit dem Läufer fest verbunden. Die Schraubmittel, z.B. Gewindeschrauben, durchdringen im verbundenen Zustand die an dem Träger, der Abdeckplatte und dem Läufer vorgesehenen Gewindeöffnungen. Da sich der Montageabschnitt und damit auch der Träger insgesamt entlang der Läufer-Längsachse nur über eine Teillänge (z.B. über die halbe Länge) des Läufers erstreckt, kann der Träger gemäß der hiesigen Erfindung im Vergleich zum Stand der Technik bauraumsparender, d. h. kompakter, ausgebildet werden. Neben dem dadurch reduzierten Bauraum, wird damit auch das Gewicht der Führungseinrichtung reduziert. Entlang des Montageabschnitts können die Gewindeöffnungen vorzugsweise gleichmäßig, insbesondere in regelmäßigem Abstand, angeordnet bzw. verteilt sein. Die Breite des Montageabschnitts entspricht im Wesentlichen der Breite des Läufers.

Der Stützflansch grenzt einteilig an den Montageabschnitt an und bildet mit diesem eine T-Form aus, wobei der Montageabschnitt den "Fuß" und der Stützflansch das "Dach" der T-Form bereitstellt. Ein einen Teil des "Dachs" der T-Form bildender Abschnitt des Stützflansches liegt in einem montierten Zustand seitlich an dem Läufer an und stützt sich an diesem ab. Der Tragabschnitt ist dahingehend angeordnet und positioniert, dass jene an dem Tragabschnitt angreifenden Kraftvektoren des Lastelements zumindest teilweise durch die Anlage des Stützflansches an dem Läufer kompensiert bzw. die zugehörigen Kräfte abgeleitet werden können. Der Stützflansch erhöht die Stabilität und Tragkraft der Führungseinrichtung. In räumlicher Hinsicht kann der Tragabschnitt der Stützfläche des Stützflansches diagonal gegenüberliegend angeordnet sein. Der Läufer stellt also durch seine Anlagefläche für die Stützfläche des Stützflansches ein Widerlager für den Tragabschnitt bereit. Der Tragabschnitt kann Tragmittel zur Befestigung bzw. Führung eines Lastelements aufweisen. Die Tragmittel können beispielsweise in Form eines Tragkopfes ausgebildet sein, der wiederrum eine zylindrische Durchgangsbohrung (zur Befestigung oder Führung des Lastelements oder eines damit verbundenen Bauteils) aufweisen kann.

Nach einer weiteren vorteilhaften Ausgestaltung kann bei einer mit der Erfindung vorgeschlagenen Führungseinrichtung vorgesehen sein, dass das Lastelement ein Türflügel einer Fahrgasttür, insbesondere einer Schwenkschiebetür oder Schiebetür, eines Fahrzeugs ist. Der Tragabschnitt kann dabei eine Einrichtung zur Anordnung eines Drehgelenks mit einer zur Führungsschiene parallelen Drehachse aufweisen, wobei an dem Drehgelenk eine Türflügelhalterung befestigbar ist. Die beschriebene Führungseinrichtung eignet sich also insbesondere zur Aufhängung und Führung eines einem Türsystem, z. B. Schwenkschiebe- oder Schiebetürsystem, zugehörigen Türflügels. Gleichsam eignet sich die Führungseinrichtung zur Aufhängung und Führung eines oder mehrerer (z.B. zweier) Türflügel, die Führungseinrichtung kann also bei ein- oder zweiflügligen Türsystemen eingesetzt werden.

Die der Erfindung zugrunde liegende Aufgabe wird zudem mit einem Türsystem, insbesondere einem Schiebe- oder Schwenkschiebetürsystem, für ein Fahrzeug des öffentlichen Personenverkehrs gelöst. Das Türsystem umfasst einen Türflügel (gegebenenfalls auch mehrere, z. B. zwei Türflügel), der unter Einsatz einer Antriebseinheit aus einer ein Türportal des Fahrzeugs verschließenden Stellung in eine einen Fahrgastzustieg durch das Türportal freigebende Öffnungsstellung bewegbar ist, wobei der Türflügel in einer Tragführung getragen ist. Die Tragführung umfasst eine erfindungsgemäß ausgebildete Führungseinrichtung. Die Tragführung bzw. Führungseinrichtung ist dabei vorzugsweise im oberen Bereich des Türportals angeordnet. Eine erfindungsgemäße Führungseinrichtung ist dabei nicht auf eine bestimmte Art eines Türsystems beschränkt. Die Führungseinrichtung kann auch bei bereits in ein Fahrzeug implementierten Türsystemen nachgerüstet werden.

Weitere Merkmale und Vorteile der Erfindung ergeben sich aus der folgenden Beschreibung eines nicht einschränkend zu verstehenden Ausführungsbeispiels der Erfindung, welches im Folgenden unter Bezugnahme auf die Zeichnungen näher erläutert wird. In diesen Zeichnungen zeigen schematisch:
- Fig. 1: eine perspektivische Teilansicht eines in einer Führungsschiene beweglich geführten Läufers, wie aus dem Stand der Technik bekannt;
- Fig. 2a: eine Querschnittsdarstellung eines mit Kugeln befüllten Läufers, wie aus dem Stand der Technik bekannt;
- Fig. 2b: eine Querschnittsdarstellung eines bei einer erfindungsgemäßen Führungseinrichtung zum Einsatz kommenden Läufers;
- Fig. 3: eine Explosionsdarstellung wesentlicher der erfindungsgemäßen Führungseinrichtung zugehöriger Komponenten;
- Fig. 4: eine perspektivische Darstellung einer erfindungsgemäßen Führungseinrichtung.

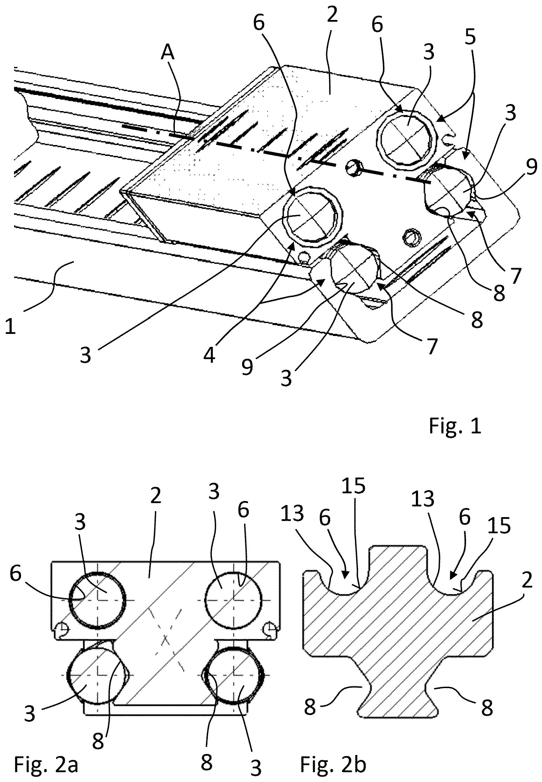

In der Figur 1 ist eine perspektivische Teilansicht einer aus dem Stand der Technik, insbesondere der EP 1 914 372 A2, bekannten Führungseinrichtung mit einem in einer Führungsschiene 1 linearbeweglich geführten Läufer 2 wiedergegeben. Der Läufer 2 greift zumindest teilweise in die Führungsschiene 1 ein. Die Führungsschiene 1 ist nach Art eines C-Profils ausgebildet.

Die Führungseinrichtung kann beispielsweise bei einem nicht dargestellten Türsystem eines Fahrzeugs (z. B. einem Fahrzeug für den öffentlichen Personenverkehr) zum Einsatz kommen. Vornehmlich eignet sich die Führungseinrichtung zum Einsatz bei einem Schiebe- oder Schwenkschiebetürsystem. Das Türsystem umfasst einen Türflügel (gegebenenfalls auch mehrere, z.B. zwei Türflügel), der unter Einsatz einer Antriebseinheit aus einer ein Türportal des Fahrzeugs verschließenden Stellung in eine einen Fahrgastzustieg durch das Türportal freigebende Öffnungsstellung bewegbar ist, wobei der Türflügel in einer Tragführung getragen ist. Die Tragführung umfasst die genannte Führungseinrichtung. Die Tragführung bzw. Führungseinrichtung ist dabei vorzugsweise im oberen Bereich des Türportals angeordnet. Die Führungseinrichtung kann auch bei bereits in ein Fahrzeug implementierten Türsystemen nachgerüstet werden.

Die linearbewegliche Führung des Läufers 2 in der Führungsschiene 1 ist durch ein Kugelumlauflager verwirklicht, wobei die dem Kugelumlauflager zugehörigen Kugeln 3 in zwei Kugelreihen 4, 5 aufgereiht und in Kugellaufbahnen geführt sind. Die einer jeweiligen Kugelreihe 4, 5 zugehörigen Kugeln 3 sind jeweils in einer sich aus einer ersten und einer zweiten Teil-Kugellaufbahn 6, 7 zusammensetzenden Kugellaufbahn geführt.

Die ersten Teil-Kugellaufbahnen 6 sind in dem Läufer 2 ausgebildet und erstrecken sich in paralleler Anordnung entlang einer Läufer-Längsachse A. Die zweiten Teil-Kugellaufbahnen 7 sind jeweils ausgebildet durch eine an dem Läufer 2 ausgebildete und sich entlang der Läufer-Längsachse A erstreckende Läufer-Führungsnut 8 und eine der jeweiligen Läufer-Führungsnut 8 gegenüberliegende, an der Führungsschiene 1 ausgebildete Führungsschienen-Führungsnut 9.

Die Fig. 2a illustriert eine Querschnittsdarstellung des bereits in der Fig. 1 im Zusammenhang mit der Führungsschiene 1 dargestellten und mit Kugeln 3 befüllten Läufers 2, wie er aus dem Stand der Technik bekannt ist. Eine jeweilige die Kugeln 3 einer der Kugelreihen 4, 5 führende Kugellaufbahn ist gebildet aus einem Paar einer der ersten Teil-Kugellaufbahnen 6 und einer der zweiten Teil-Kugellaufbahnen 7, wobei sich die dem Paar zugehörige erste und zweite Teil-Kugellaufbahn 6, 7 diagonal gegenüberliegen. Der Läufer 2 weist im Querschnitt eine T-Form auf, wobei die ersten Teil-Kugellaufbahnen 6 dabei in Form von in dem Läufer 2 ausgebildeten geschlossenen Führungskanälen ausgebildet sind. Ein Kugelaustausch kann demnach lediglich an den stirnseitigen Enden des Läufers 2 erfolgen.

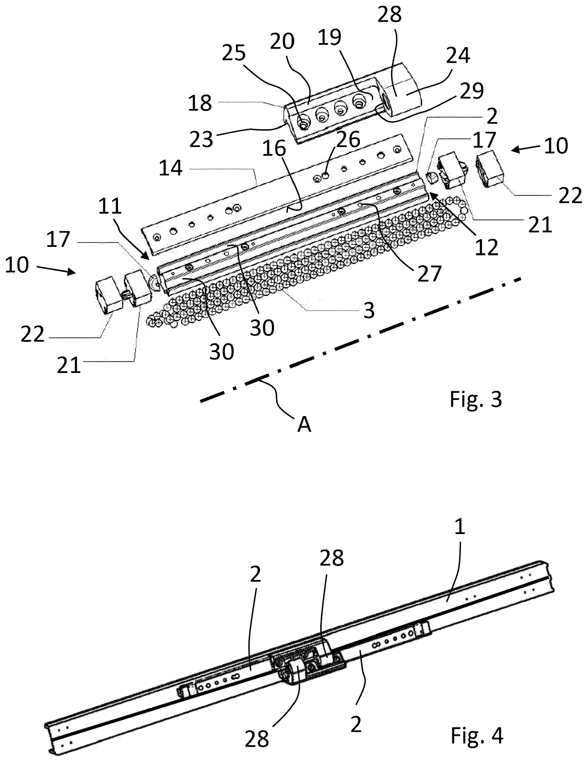

Im Gegensatz dazu sind bei einem Läufer 2 gemäß der Erfindung (siehe Fig. 2b) die jeweiligen Führungskanäle 30 (Fig. 3) der ersten Teil-Kugellaufbahnen 6 nach Art einer Halbschale 13 ausgebildet, d.h. sie weisen eine sich entlang des Führungskanals 30 erstreckende Halbschalenöffnung auf. Gemäß der Erfindung sind die Halbschalenöffnungen beider paralleler Führungskanäle 30 durch eine Abdeckplatte 14 nach außen begrenzt (Fig. 3, 4). Die Abdeckplatte 14 ist über geeignete Verbindungsmittel bzw. Befestigungsmittel an dem Läufer 2 befestigt. Die Verbindung respektive Befestigung erfolgt dabei reversibel (d.h. lösbar), sodass ein einfacher Austausch der in den ersten Teil-Kugellaufbahnen angeordneten Kugeln 3 (auch im montierten Zustand der Führungseinrichtung) ermöglicht ist. Dabei liegen die in den ersten Teil-Kugellaufbahnen 6 geführten Kugeln 3 mit ihrer Kugeloberfläche an einer Innenfläche 15 des Führungskanals 30 und/oder an einer dem Führungskanal 30 zugewandten Innenfläche 16 der Abdeckplatte 14 an. Die zweiten Teil-Kugellaufbahnen 7 sind - wie bei der aus dem Stand der Technik bekannten Führungseinrichtung (vgl. Fig. 1) - jeweils gebildet aus einer an dem Läufer 2 ausgebildeten und sich entlang der Läufer-Längsachse A erstreckenden Läufer-Führungsnut 8 und einer der Läufer-Führungsnut 8 gegenüberliegenden, an der Führungsschiene 1 ausgebildeten Führungsschienen-Führungsnut 9.

Die Kugel-Umlenkung der Kugeln 3 von einer der ersten Teil-Kugellaufbahnen 6 in eine der zweiten Teil-Kugellaufbahnen 7 und umgekehrt wird bei einer räumlichen Überkreuzanordnung der die jeweiligen Kugellaufbahnen bereitstellenden Teil-Kugellaufbahnen 6, 7 durch Umlenkmittel 10 verwirklicht, die im Bereich eines - bezogen auf die Läufer-Längsachse A - ersten und zweiten Läufer-Endes 11, 12 angeordnet sind (siehe Fig. 3). Die Umlenkmittel 10 können ein- oder mehrteilig ausgebildet sein. Wie in der Fig. 3 wiedergegeben sind die an einem jeweiligen Läufer-Ende 11, 12 angeordneten Umlenkmittel 10 aus einem ersten Teil-Umlenkmittel 21 und einem zweiten Teil-Umlenkmittel 22 zusammengesetzt, jeweils die Umlenkung der Kugeln 3 einer der Kugellaufbahnen verwirklichend. Nebst den ersten und zweiten Teil-Umlenkmitteln 21, 22 können die jeweiligen Umlenkmittel 10 zusätzlich Einsatzelemente 17 aufweisen, deren Funktion an dieser Stelle nicht weiter beschrieben sei.

Die mit dem Läufer 2 gemäß der Erfindung zusammenwirkenden Komponenten der erfindungsgemäßen Führungseinrichtung sind in der Explosionsdarstellung nach Fig. 3 wiedergegeben. So umfasst die Führungseinrichtung nebst den vorangehend beschriebenen Komponenten einen zum Tragen eines Lastelements (nicht dargestellt) ausgebildeten Träger 18, der mit dem Läufer 2 lösbar verbunden ist. Der Träger 18 ist gebildet aus einem Montageabschnitt 19, der dazu ausgebildet ist, mit dem Läufer 2 und/oder der Abdeckplatte 14 lösbar verbunden zu werden, wobei sich der Montageabschnitt 19 entlang der Läufer-Längsachse A über eine Teillänge des Läufers 2 erstreckt. Ferner umfasst der Träger 18 einen seitlich an den Montageabschnitt 19 angrenzenden Stützflansch 20, der dazu ausgebildet ist, mit einer Stützfläche 23 seitlich an dem Läufer 2 anzuliegen und sich an diesem abzustützen. Weiterhin weist der Träger 18 einen Tragabschnitt 24 auf, der dazu ausgebildet ist, das Lastelement zu tragen und/oder zu führen.

Der Stützflansch 20 grenzt einteilig an den Montageabschnitt 19 an und bildet mit diesem eine T-Form aus, wobei der Montageabschnitt 19 den "Fuß" und der Stützflansch 20 das "Dach" der T-Form bereitstellt. Ein einen Teil des "Dachs" der T-Form bildender Abschnitt (die Stützfläche 23) des Stützflansches 20 liegt in einem montierten Zustand seitlich an dem Läufer 2 an und stützt sich an diesem ab.

Der Tragabschnitt 24 ist dahingehend angeordnet und positioniert, dass jene an dem Tragabschnitt 24 angreifenden Kraftvektoren des Lastelements (nicht dargestellt) zumindest teilweise durch die Anlage des Stützflansches 20 an dem Läufer 2 kompensiert bzw. die zugehörigen Kräfte (in Richtung der Führungsschiene 1) abgeleitet werden können. Der Stützflansch 20 erhöht die Stabilität und Tragkraft der Führungseinrichtung. In räumlicher Hinsicht ist der Tragabschnitt 24 der Stützfläche 23 des Stützflansches 20 diagonal gegenüberliegend angeordnet. Der Läufer 2 stellt also durch seine Anlagefläche für die Stützfläche 23 des Stützflansches 20 ein Widerlager für den Tragabschnitt 24 bereit. Der Tragabschnitt 24 umfasst Tragmittel zur Befestigung bzw. Führung des Lastelements. Im dargestellten (jedoch nicht einschränkend zu verstehenden) Ausführungsbeispiel sind die Tragmittel in Form eines Tragkopfes 28 ausgebildet, wobei der Tragkopf 28 eine zylindrische Durchgangsbohrung 29 (zur Befestigung oder Führung des Lastelements oder eines damit verbundenen Bauteils) aufweist. Die Abdeckplatte 14 und der Träger 18 sind in einem montierten Zustand über Befestigungsmittel, insbesondere Schraubmittel, mit dem Läufer 2 lösbar verbunden, wobei die Abdeckplatte 14 zwischen dem Läufer 2 und dem Träger 18 angeordnet ist. Zur Verbindung der genannten Komponenten sind in dem Montageabschnitt 19 Gewindeöffnungen 25 ausgebildet, die mit in der Abdeckplatte 14 und dem Läufer 2 ausgebildeten Gewindeöffnungen 26, 27 kongruent in Deckung verbringbar sind, sodass jeweiligen Gewindeöffnungen übereinanderliegen und unter Einsatz von Gewindeschrauben (nicht dargestellt) verbunden werden können.

Wie in der Figur 4 schematisch dargestellt können an einer Führungsschiene 1 auch mehrere Läufer 2 (samt zugehörigen Komponenten wie dem Träger 18 für Lastelemente) angeordnet sein, wobei eine solche Anordnung beispielsweise bei zweiflügligen Schiebetüren oder Schwenkschiebetüren zum Einsatz kommen kann. An den jeweiligen Trägern 18 bzw. Tragköpfen 28 kann jeweils ein Türflügel befestigt und/oder geführt sein.

### Bezugszeichenliste

- 1: Führungsschiene
- 2: Läufer
- 3: Kugel
- 4: Kugelreihe
- 5: Kugelreihe
- 6: erste Teil-Kugellaufbahn
- 7: zweite Teil-Kugellaufbahn
- 8: Läufer-Führungsnut
- 9: Führungsschienen-Führungsnut
- 10: Umlenkmittel
- 11: erstes Läufer-Ende
- 12: zweites Läufer-Ende
- 13: Halbschale
- 14: Abdeckplatte
- 15: Innenfläche
- 16: Innenfläche
- 17: Einsatzelement
- 18: Träger
- 19: Montageabschnitt
- 20: Stützflansch
- 21: erstes Teil-Umlenkmittel
- 22: zweites Teil-Umlenkmittel
- 23: Stützfläche
- 24: Tragabschnitt
- 25: Gewindeöffnung
- 26: Gewindeöffnung
- 27: Gewindeöffnung
- 28: Tragkopf
- 29: Durchgangsbohrung
- 30: Führungskanal
- A: Läufer-Längsachse

## Patentansprüche

1. Führungseinrichtung, umfassend eine Führungsschiene (1) sowie einen zumindest teilweise in die Führungsschiene (1) eingreifenden und in der Führungsschiene (1) über ein Kugelumlauflager linearbeweglich geführten Läufer (2), wobei die dem Kugelumlauflager zugehörigen Kugeln (3) in zumindest einer Kugelreihe (4, 5) aufgereiht und in zumindest einer Kugellaufbahn geführt sind, wobei die einer jeweiligen Kugelreihe (4, 5) zugehörigen Kugeln (3) jeweils in einer sich aus einer ersten und einer zweiten Teil-Kugellaufbahn (6, 7) zusammensetzenden Kugellaufbahn geführt sind, wobei die erste Teil-Kugellaufbahn (6) in dem Läufer (2) ausgebildet ist und sich entlang einer Läufer-Längsachse (A) erstreckt und wobei die zweite Teil-Kugellaufbahn (7) ausgebildet ist durch eine an dem Läufer (2) ausgebildete und sich entlang der Läufer-Längsachse (A) erstreckende Läufer-Führungsnut (8) und eine der Läufer-Führungsnut (8) gegenüberliegende, an der Führungsschiene (1) ausgebildete Führungsschienen-Führungsnut (9), und wobei im Bereich eines bezogen auf die Läufer-Längsachse (A) ersten und zweiten Läufer-Endes (11, 12) jeweils Umlenkmittel (10) zum Umlenken der Kugeln (3) aus der ersten (6) in die zweite (7) Teil-Kugellaufbahn (6, 7) und umgekehrt angeordnet sind, wobei
die erste Teil-Kugellaufbahn (6) ausgebildet ist durch einen sich entlang der Läufer-Längsachse (A) erstreckenden und in dem Läufer (2) ausgebildeten Führungskanal (30) sowie eine den Führungskanal (30) nach außen begrenzende Abdeckplatte (14), wobei die Abdeckplatte (14) mit dem Läufer (2) lösbar verbunden ist,
**dadurch gekennzeichnet, dass** ein zum Tragen eines Lastelements ausgebildeter Träger (18) mit dem Läufer (2) lösbar verbunden ist und der Träger (18) gebildet ist aus
a. einem Montageabschnitt (19), der dazu ausgebildet ist, mit dem Läufer (2) und/oder der Abdeckplatte (14) lösbar verbunden zu werden, wobei sich der Montageabschnitt (19) entlang der Läufer-Längsachse (A) über eine Teillänge des Läufers (2) erstreckt;
b. einem seitlich an den Montageabschnitt (19) angrenzenden Stützflansch (20), der dazu ausgebildet ist, mit einer Stützfläche (23) seitlich an dem Läufer (2) anzuliegen und sich an diesem abzustützen;
c. und einem Tragabschnitt (24), der dazu ausgebildet ist, das Lastelement zu tragen und/oder zu führen.

2. Führungseinrichtung nach Anspruch 1, **dadurch gekennzeichnet, dass** die Kugeln (3) in zwei Kugelreihen (4, 5) aufgereiht sind, wobei die Kugeln (3) einer jeweiligen Kugelreihe (4, 5) in einer aus einer ersten Teil-Kugellaufbahn (6) und einer zweiten Teil-Kugellaufbahn (7) gebildeten Kugellaufbahn geführt sind.

3. Führungseinrichtung nach Anspruch 2, **dadurch gekennzeichnet, dass** die ersten und zweiten Teil-Kugellaufbahnen (6, 7) parallel angeordnet sind.

4. Führungseinrichtung nach einem der vorangehenden Ansprüche, **dadurch gekennzeichnet, dass** die Kugeln (3) bei demontierter Abdeckplatte (14) austauschbar sind.

5. Führungseinrichtung nach einem der Ansprüche 2 bis 4, **dadurch gekennzeichnet, dass** die in den ersten Teil-Kugellaufbahnen (6) geführten Kugeln (3) mit ihrer Kugeloberfläche an einer Innenfläche (15) des Führungskanals (30) und/oder an einer dem Führungskanal (30) zugewandten Innenfläche (16) der Abdeckplatte (14) anliegen.

6. Führungseinrichtung nach einem der Ansprüche 2 bis 5, **dadurch gekennzeichnet, dass** jene die Kugeln (3) einer der Kugelreihen (4, 5) führende Kugellaufbahn gebildet ist aus einem Paar einer der ersten und einer der zweiten Teil-Kugellaufbahnen (6, 7), wobei sich die dem Paar zugehörige erste und zweite Teil-Kugellaufbahn (6, 7) diagonal gegenüberliegen.

7. Führungseinrichtung nach einem der vorangehenden Ansprüche, **dadurch gekennzeichnet, dass** die Abdeckplatte (14) und der Träger (18) über Befestigungsmittel, insbesondere Schraubmittel, mit dem Läufer (2) lösbar verbunden sind, wobei die Abdeckplatte (14) zwischen dem Läufer (2) und dem Träger (18) angeordnet ist.

8. Führungseinrichtung nach einem der vorangehenden Ansprüche, **dadurch gekennzeichnet, dass** in dem Montageabschnitt (19) Gewindeöffnungen (25) ausgebildet sind, die mit in der Abdeckplatte (14) und dem Läufer (2) ausgebildeten Gewindeöffnungen (26, 27) kongruent in Deckung verbringbar sind, sodass die jeweiligen Gewindeöffnungen (25, 26, 27) übereinanderliegen.

9. Führungseinrichtung nach Anspruch 8, **dadurch gekennzeichnet, dass** in einem montierten Zustand Schraubmittel, insbesondere Gewindeschrauben, in die übereinanderliegenden Gewindeöffnungen (25, 26, 27) eingreifen.

10. Führungseinrichtung nach einem der vorangehenden Ansprüche, **dadurch gekennzeichnet, dass** das Lastelement ein Türflügel einer Fahrgasttür, insbesondere einer Schwenkschiebetür oder Schiebetür, eines Fahrzeugs ist.

11. Führungseinrichtung einem der vorangehenden Ansprüche, **dadurch gekennzeichnet, dass** der Tragabschnitt (24) eine Einrichtung zur Anordnung eines Drehgelenks mit einer zur Führungsschiene (1) parallelen Drehachse aufweist, wobei an dem Drehgelenk eine Türflügelhalterung befestigbar ist.

12. Türsystem, insbesondere Schiebe- oder Schwenkschiebetürsystem, für ein Fahrzeug des öffentlichen Personenverkehrs, umfassend einen Türflügel, der unter Einsatz einer Antriebseinheit aus einer ein Türportal des Fahrzeugs verschließenden Stellung in eine einen Fahrgastzustieg durch das Türportal freigebende Öffnungsstellung bewegbar ist, wobei der Türflügel in einer Tragführung getragen ist, die Tragführung umfassend eine nach einem der Ansprüche 1 bis 11 ausgebildete Führungseinrichtung.

## Claims

1. A guide device, comprising a guide rail (1) as well as a slider (2) engaging at least partially in the guide rail (1) and guided in a linear motion in the guide rail (1) via a recirculating ball bearing, wherein the balls (3) associated with the recirculating ball bearing are lined up in at least one ball row (4, 5) and guided in at least one ball raceway, wherein the balls (3) associated with a respective ball row (4, 5) are respectively guided in a ball raceway composed of a first and a second partial ball raceway (6, 7), wherein the first partial ball raceway (6) is formed in the slider (2) and extends along a slider longitudinal axis (A) and wherein the second partial ball raceway (7) is formed by a slider guide groove (8) formed on the slider (2) and extending along the slider longitudinal axis (A) and a guide rail guide groove (9) opposite the slider guide groove (8) and formed on the guide rail (1), and wherein in the region of a first and second slider end (11, 12) with respect to the slider longitudinal axis (A) deflection means (10) are respectively arranged for deflecting the balls (3) from the first (6) to the second (7) partial ball raceway (6, 7) and vice versa, wherein the first partial ball raceway (6) is formed by a guide channel (30) extending along the slider longitudinal axis (A) and formed in the slider (2) as well as a cover plate (14) delimiting the guide channel (30) to the outside, wherein the cover plate (14) is releasably connected to the slider (2), **characterized in that** a carrier (18) designed to carry a load element is releasably connected to the slider (2) and the carrier (18) is formed from
a. a mounting section (19), which is designed to be releasably connected to the slider (2) and/or the cover plate (14), wherein the mounting section (19) extends along the slider longitudinal axis (A) over a partial length of the slider (2);
b. a support flange (20) laterally adjacent to the mounting section (19) and designed to rest laterally against the slider (2) with a support surface (23) and to be supported thereon;
c. and a carrier section (24), which is designed to carry and/or guide the load element.

2. The guide device according to Claim 1, **characterized in that** the balls (3) are lined up in two ball rows (4, 5), wherein the balls (3) of a respective ball row (4, 5) are guided in a ball raceway formed from a first partial ball raceway (6) and a second partial ball raceway (7).

3. The guide device according to Claim 2, **characterized in that** the first and second partial ball raceways (6, 7) are arranged parallel.

4. The guide device according to one of the preceding claims, **characterized in that** the balls (3) can be replaced when the cover plate (14) is removed.

5. The guide device according to one of Claims 2 to 4, **characterized in that** the balls (3) guided in the first partial ball raceways (6) rest with their ball surface against an inner surface (15) of the guide channel (30) and/or against an inner surface (16) of the cover plate (14) facing the guide channel (30).

6. The guide device according to one of Claims 2 to 5, **characterized in that** the ball raceway guiding the balls (3) of one of the ball rows (4, 5) is formed from a pair of one of the first and one of the second partial ball raceways (6, 7), wherein the first and second partial ball raceways (6, 7) associated with the pair lie diagonally opposite one another.

7. The guide device according to one of the preceding claims, **characterized in that** the cover plate (14) and the carrier (18) are releasably connected to the slider (2) via attachment means, in particular screw means, wherein the cover plate (14) is arranged between the slider (2) and the carrier (18).

8. The guide device according to one of the preceding claims, **characterized in that** threaded openings (25) are formed in the mounting section (19), which can be brought into congruent alignment with threaded openings (26, 27) formed in the cover plate (14) and the slider (2) such that the respective threaded openings (25, 26, 27) lie one above the other.

9. The guide device according to Claim 8, **characterized in that** in an assembled state, screw means, in particular threaded screws, engage in the threaded openings (25, 26, 27) lying one above the other.

10. The guide device according to one of the preceding claims, **characterized in that** the load element is a door leaf of a passenger door, in particular of a sliding plug door or sliding door, of a vehicle.

11. The guide device according to one of the preceding claims, **characterized in that** the carrier section (24) has a device for arranging a rotary joint with an axis of rotation parallel to the guide rail (1), wherein a door leaf holder can be attached to the rotary joint.

12. A door system, in particular sliding or sliding plug door system, for a public transport vehicle, comprising a door leaf, which, using a drive unit, can be moved from a position closing a doorway of the vehicle to an opening position allowing passengers to board through the doorway, wherein the door leaf is supported in a support guide, the support guide comprising a guide device designed according to one of Claims 1 to 11.

## Revendications

1. Système de guidage, comprenant un rail de guidage (1) et au moins un élément mobile (2) venant en prise au moins en partie dans le rail de guidage (1) et guidé en mouvement linéaire dans le rail de guidage (1) par un palier à circulation de billes, sachant que les billes (3) appartenant au palier à circulation de billes sont rangées en au moins une rangée de billes (4, 5) et sont guidées dans au moins un chemin de roulement de billes, sachant que les billes (3) appartenant à une rangée de billes (4, 5) respective sont respectivement guidées dans une chemin de roulement de billes se composant d'une première et d'une deuxième partie de chemin de roulement de billes (6, 7), sachant que la première partie de chemin de roulement de billes (6) est constituée dans l'élément mobile (2) et s'étend le long d'un axe longitudinal d'élément mobile (A) et sachant que la deuxième partie de chemin de roulement de billes (7) est constituée par une rainure de guidage d'élément mobile (8) constituée sur l'élément mobile (2) et s'étendant le long d'un axe longitudinal d'élément mobile (A) et par une rainure de guidage de rail de guidage (9) constituée sur le rail de guidage (1), opposée à la rainure de guidage d'élément mobile (8) et sachant que dans la zone d'une première et d'une deuxième extrémité d'élément mobile (11, 12) en référence à l'axe longitudinal d'élément mobile (A) sont respectivement disposés des moyens de renvoi (10) pour renvoyer les billes (3) de la première (6) dans la deuxième (7) partie de chemin de roulement de billes (6, 7) et vice versa,
sachant que la première partie de chemin de roulement de billes (6) est constituée par un conduit de guidage (30) s'étendant le long de l'axe longitudinal d'élément mobile (A) et constitué dans l'élément mobile (2) et par une plaque de couverture (14) limitant le conduit de guidage (30) vers l'extérieur, sachant que la plaque de couverture (14) est reliée de façon amovible à l'élément mobile (2),
**caractérisé en ce qu'**un support (18) constitué pour supporter un élément de charge est relié de façon amovible à l'élément mobile (2) et le support (18) est formé d'une
a. section de montage (19), qui est constituée pour être reliée de façon mobile à l'élément mobile (2) et/ou à la plaque de couverture (14), sachant que la section de montage (19) s'étend le long de l'axe longitudinal d'élément mobile (A) sur une partie de longueur de l'élément mobile (2),
b. une bride de support (20) latéralement limitrophe de la section de montage (19), qui est constituée pour adhérer latéralement avec une surface de support (23) à l'élément mobile (2) et s'appuyer à celui-ci,
c. et une section porteuse (24), qui est constituée pour porter et/ou guider l'élément de charge.

2. Système de guidage selon la revendication 1, **caractérisé en ce que** les billes (3) sont rangées en deux rangs de billes (4, 5), sachant que les billes (3) d'une rangée de billes respective (4, 5) sont guidées dans un chemin de roulement de billes formé d'une première partie de chemin de roulement de billes (6) et d'une deuxième partie de chemin de roulement de billes (7).

3. Système de guidage selon la revendication 2, **caractérisé en ce que** les premières et deuxièmes parties de chemins de roulement de billes (6, 7) sont disposées de façon parallèle.

4. Système de guidage selon l'une quelconque des revendications précédentes, **caractérisé en ce que** les billes (3) peuvent être changées une fois la plaque de couverture (14) démontée.

5. Système de guidage selon l'une quelconque des revendications 2 à 4, **caractérisé en ce que** les billes (3) guidées dans les premières parties de chemin de roulement de billes (3) reposent avec leur surface sphérique sur une surface intérieure (15) du conduit de guidage (30) et/ou sur une surface intérieure (16) de la plaque de couverture (14), tournée vers le conduit de guidage (30).

6. Système de guidage selon l'une quelconque des revendications 2 à 5, **caractérisé en ce que** chaque chemin de roulement de billes guidant les billes (3) d'une des rangées de billes (4, 5) est formé d'une paire d'une des premières et d'une des deuxièmes parties de chemin de circulation de billes (6, 7), sachant que la première et la deuxième partie de chemin de roulement de billes (6, 7) correspondant à la paire sont opposées en diagonale.

7. Système de guidage selon l'une quelconque des revendications précédentes, **caractérisé en ce que** la plaque de couverture (14) et le support (18) sont reliés de façon amovible à l'élément mobile (2) par des moyens de fixation, en particulier de moyens à vis, sachant que la plaque de couverture (14) est disposée entre l'élément mobile (2) et le support (18).

8. Système de guidage selon l'une quelconque des revendications précédentes, **caractérisé en ce que** des orifices filetés (25) sont constitués dans la section de montage (19), qui peuvent être placés en coïncidence de couverture avec les orifices filetés (26, 27) constitués dans la plaque de couverture (14) et l'élément mobile (2) de telle manière que les orifices filetés respectifs (25, 26, 27) se superposent.

9. Système de guidage selon la revendication 8, **caractérisé en ce qu'**à l'état monté, des moyens de vissage, en particulier des vis, viennent en prise dans les orifices filetés (25, 26, 27) superposés.

10. Système de guidage selon au moins l'une quelconque des revendications précédentes, **caractérisé en ce que** l'élément de charge est un battant de porte d'une porte pour passager, en particulier d'une porte pivotante coulissante ou d'une porte coulissante d'un véhicule.

11. Système de guidage selon l'une quelconque des revendications précédentes, **caractérisé en ce que** la section porteuse (24) comporte un agencement pour la mise en place d'une articulation pivotante avec un axe de rotation parallèle au rail de guidage (1), sachant qu'une fixation de battant de porte peut être fixée sur l'articulation pivotante.

12. Système de porte, en particulier système de porte coulissante ou pivotante coulissante, pour un véhicule de transport publique de personnes, comprenant un battant de porte, qui peut être déplacé en utilisant une unité d'entraînement d'une position fermant un portique de porte du véhicule à une position d'ouverture libérant un accès de passager par le portique de porte, sachant que le battant de porte est supporté dans un guidage de support, le guidage de support comprenant un système de guidage constitué selon l'une quelconque des revendications 1 à 11.
